# EUROPÄISCHE PATENTSCHRIFT

(11) **EP 1 336 231 B1**
(45) Veröffentlichungstag und Bekanntmachung des Hinweises auf die Patenterteilung: **06.04.2011**
(21) Anmeldenummer: 01956422.8
(22) Anmeldetag: 03.08.2001
(51) Int. Cl.: H02B 11/28

(54) **EINRICHTUNG ZUR ERDUNG EINES IN EINEM EINSCHUBRAHMEN VERSCHIEBBAR ANGEORDNETEN SCHALTGERÄTES**
DEVICE FOR EARTHING A SWITCHING DEVICE ARRANGED IN A MODULE FRAME IN A DISPLACEABLE MANNER
DISPOSITIF DE MISE A LA TERRE D'UN APPAREIL DE DISTRIBUTION MONTE DEPLA ABLE DANS UN CADRE DE BAIE

(30) Priorität: 23.11.2000 DE 20020401 U
(43) Veröffentlichungstag der Anmeldung: 20.08.2003
(73) Patentinhaber: SIEMENS AKTIENGESELLSCHAFT, 80333 München (DE)
(72) Erfinder: BANGHARD, Johannes-Gerh, 16515 Friedrichsthal (DE); DEYLITZ, Erhard, 13125 Berlin (DE); LOSCH, Stefan, 13595 Berlin (DE)
(86) Internationale Anmeldenummer: PCT/DE2001/002984
(87) Internationale Veröffentlichungsnummer: WO 2002/043209

(56) Entgegenhaltungen:
- DE-B- 1 201 460
- DE-U- 7 809 545

## Beschreibung

Die Erfindung liegt auf dem Gebiet der elektrischen Schaltanlagen und ist bei der konstruktiven Ausgestaltung einer Einrichtung zur Erdung eines Schaltgerätes anzuwenden, das in einem Einschubrahmen einer Schaltanlage zwischen einer Trennstellung und einer Betriebsstellung verschiebbar angeordnet ist. - Derartige Einrichtungen zur Erdung sind bedarfsweise vorgesehen, um ein in den Einschubrahmen einzuschiebendes oder aus dem Einschubrahmen herauszunehmendes Schaltgerät über den gesamten Verschiebungsweg von der Trennstellung bis zur Betriebsstellung so zu erden, dass Ströme in der Größenordnung von 50 kA über anzuschließende Erdungsmittel bis zu 1s lang sicher abgeleitet werden.

DE 78 09 545 U offenbart eine Einrichtung zur Erdung eines in einem Einschubrahmen zwischen einer Trennstellung und einer Betriebsstellung verschiebbar angeordneten Schaltgerätes mit einem am Schaltergerät angeordneten ersten Kontakt, einem dem Einschubrahmen zugeordneten zweiten Kontakt und einen dem ersten Kontakt zugeordneten Kontaktträger, bei der sich beide Kontakte in Verschiebungsrichtung des Schaltgerätes derart erstrecken, dass sie beim Verschieben des Schaltgerätes von der Trennstellung bis zur Betriebsstellung federnd aneinander anliegen und bei der der Kontaktträger ein erster Teilbereich und einen mit dem zweiten Kontakt verbindbaren zweiten Teilbereich sowie ein diese beiden Teilbereiche verbindendes Kontaktband aufweist.

Bei einer dafür vorgesehenen bekannten Erdungseinrichtung ist ein erster, als Kontaktmesser ausgebildeter Kontakt am Schaltgerät und ein zweiter, mit Kontaktfingern versehener Gegenkontakt am Einschubrahmen fest angeordnet. Hierbei erstrecken sich die Kontaktflächen beider Kontakte derart in Verschiebungsrichtung des Schaltgerätes, dass sie beim Verschieben des Schaltgerätes von der Trennstellung bis zur Betriebsstellung aneinander anliegen. Für eine ordnungsgemäße Ableitung sehr hoher Ströme ist wesentlich, dass die Kontaktflächen des zweiten Kontaktes beiderseits des ersten Kontaktes mit gleicher Kontaktkraft anliegen. Um dies zu gewährleisten, weist die bekannte Einrichtung zusätzlich eine den zweiten Kontakt übergreifende Kontaktkraftfeder auf. Zur Befestigung eines Erdungsmittels - beispielsweise in Form eines Leiterseiles - ist bei dieser bekannten Einrichtung in der Praxis an einem freitragenden Ende eines starren, mit dem zweiten Kontakt an der Rückwand des Einschubrahmens fest verschraubten Kontaktträgers ein Anschluss ausgebildet. Die Schraubverbindung ist dabei so ausgebildet, dass der zweite Kontakt über erste Lagerflächen an der Außenseite der Rückwand des Einschubrahmens und das der Schraube zugeordnete Gegenstück über zweite Lagerflächen an der Innenseite der Rückwand fest anliegen (technischer Katalog A.S505-D-01 der Firma ABB SACE, April 1997). - Bei einem sehr hohen abzuleitenden Strom wirken erhebliche elektrodynamische Kräfte vom Erdungsmittel auf das mit dem Anschluss versehene freitragende Ende des Kontaktträgers. Unter der Einwirkung dieser Kräfte kann der Kontaktträger verbogen und dabei die Schraubverbindung zwischen dem Kontaktträger und dem zweiten Kontakt beschädigt oder gelockert werden.

Der Erfindung liegt die Aufgabe zugrunde, für den bekannten Erdungszweck eine Einrichtung zu schaffen, bei der der Kontaktträger von elektrodynamischen Krafteinwirkungen entlastet und dabei montagefreundlich gestaltet ist.

Zur Lösung dieser Aufgabe ist in Abwandlung der bekannten Erdungseinrichtung vorgesehen, dass der Kontaktträger einen ersten, zum Anschluss eines Erdungsmittels vorgesehenen Teilbereich und einen zweiten, mit dem zweiten Kontakt verbindbaren Teilbereich sowie ein diese beiden Teilbereiche verbindendes Kontaktband aufweist; hierbei ist weiterhin vorgesehen, dass der erste Teilbereich mit dem Einschubrahmen fest verbindbar ist und dass der zweite Teilbereich mit quer zur Verschiebungsrichtung des Schaltgerätes verlaufendem Spiel an der Rückwand des Einschubrahmens gehalten ist.

Bei einer derartigen Ausgestaltung sind die beiden Teilbereiche nicht starr verbunden, sondern über ein flexibles Stromband voneinander mechanisch entkoppelt. Der zum Anschluss des Erdungsmittels vorgesehene erste Teilbereich ist bei angeschlossenem Erdungsmittel am Einschubrahmen fixiert, so dass die elektrodynamischen Kräfte vom Einschubrahmen aufgenommen werden. Aufgrund des vorgesehenen Spiels des den zweiten Kontakt tragenden zweiten Teilbereiches des Kontaktträgers richtet sich der zweite Kontakt beim Einschieben des Schaltgerätes in den Einschubrahmen selbsttätig optimal auf den ersten Kontakt aus.- Der Spielraum wird vorzugsweise dadurch realisiert, dass der zweite Teilbereich des Kontaktträgers als Lasche ausgebildet ist, die in am Einschubrahmen ausgebildeten Halteschlitzen verschiebbar angeordnet ist. Hierbei kann an dem zweiten Teilbereich ein Führungselement ausgebildet sein, das in eine in der Rückwand des Einschubrahmens ausgebildete Führung eingreift. - Durch eine derartige Ausgestaltung ist es zum einen möglich, das Spiel des zweiten Teilbereichs auf eine vorgegebene bevorzugte Richtung, insbesondere quer zu den Kontaktflächen der Kontakte, zu begrenzen und zum anderen, die Größe des Spiels vorzugeben.

Vorteilhaft ist weiterhin, wenn der zweite Teilbereich des Kontaktträgers an der Innenseite der Rückwand des Einschubrahmens anliegt und der Einschubrahmen eine Durchführung für das Kontaktband aufweist.- Hierdurch bleibt die außenseitige Gestaltung des Einschubrahmens unverändert, so dass dem Schaltgerät zuzuordnende Teile einer Schaltanlage, beispielsweise eine Isolierwand, ebenfalls unverändert bleiben können.

Bei der neuen Erdungseinrichtung sind der erste und der zweite Kontakt - die als Kontaktmesser und als mit Kontaktfingern versehener Gegenkontakt ausgebildet sein können - zweckmäßig so angeordnet, dass die Kontaktflächen beider Kontakte parallel zu einer Seitenwand des Einschubrahmens verlaufen. - Dies gewährleistet eine möglichst kurze Länge des zur Verbindung der beiden Teilbereiche verwendeten Kontaktbandes.

Ein Ausführungsbeispiel der neuen Erdungseinrichtung ist in den Figuren 1 bis 5 dargestellt. Dabei zeigen
Figur 1 einen Niederspannungs-Leistungsschalter, der in einen Einschubrahmen einschiebbar ist,
Figur 2 einen Ausschnitt einer Innenansicht eines Einschubrahmens für den Niederspannungs-Leistungsschalter gemäß Figur 1,
Figur 3 dem Einschubrahmen zugeordnete Elemente der neuen Erdungseinrichtung in Explosionsdarstellung,
Figur 4 einen Ausschnitt einer Außenansicht des Einschubrahmens und
Figur 5 eine Schnittdarstellung der in dem Einschubrahmen angeordneten Elemente der Erdungseinrichtung gemäß Figur 4 entlang der Linie A-A.

In elektrischen Schaltanlagen weisen die zur Aufnahme von elektrischen Schaltern vorgesehenen Einschubrahmen aus Gründen des Personenschutzes einen Anschluss für ein Erdungsmittel (beispielsweise ein Leiterseil, das mit einem Erdungspunkt verbunden ist) auf. Zur Einhaltung der meisten bestehenden Sicherheitsforderungen ist es ausreichend, wenn die metallischen Bereiche der Außenwand eines Schaltgerätes beim Einschub in einen derart zu erdenden Einschubrahmen den Einschubrahmen kontaktieren und dadurch über den Erdungsanschlusses des Einschubrahmens geerdet werden. Hierfür geeignete bekannte Schaltgeräte kontaktieren den Einschubrahmen beispielsweise über ihre Führungsschienen oder über an der Seitenwand des Schaltgerätes mitgeführte, an der Seitenwand des Einschubrahmens schleifende Kontaktkraftfedern. Derartige Einrichtungen genügen jedoch nicht örtlich geltenden strengeren Sicherheitsforderungen, bei denen beispielsweise gefordert ist, dass Ströme bis zu 60 kA sicher vom Schaltgerät abgeleitet werden können. Bei dem nachfolgend beschriebenen Ausführungsbeispiel der neuen Erdungseinrichtung handelt es sich um eine nachlieferbare, zusätzliche Erdungseinrichtung, mit der eine Schaltanlage nachgerüstet werden kann, wenn sie einer derartigen strengeren Sicherheitsforderung unterliegt.

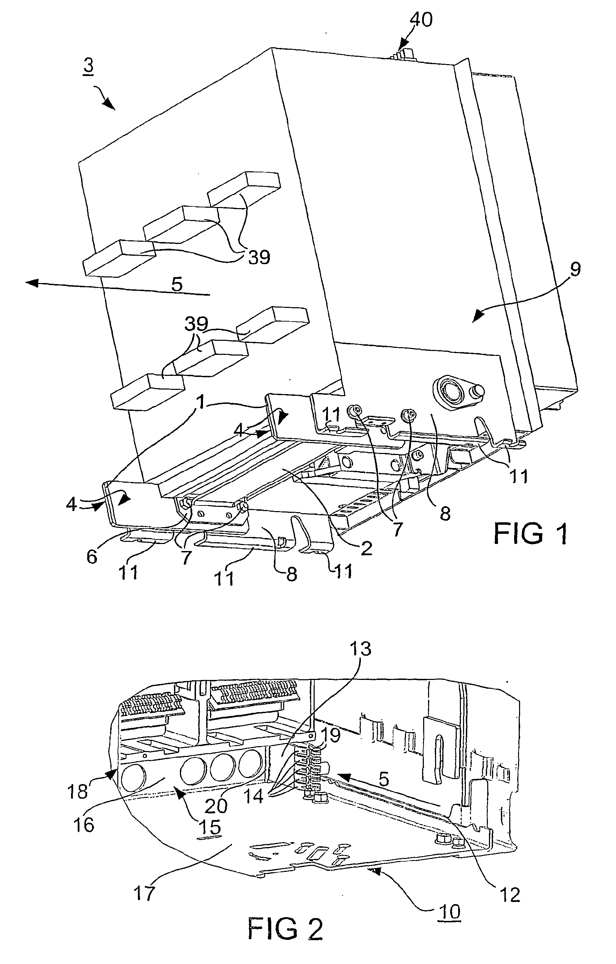

Gemäß Figur 1 weist diese nachrüstbare Erdungseinrichtung zwei als Kontaktmesser ausgebildete erste Kontakte 1 auf, die über einen Träger 2 leitend miteinander verbunden und im Bodenbereich des als Niederspannungs-Leistungsschalter ausgebildeten Schaltgerätes 3 angeordnet sind. Die Kontaktmesser erstrecken sich - voreilend zu Hauptkontakten 39 und Nebenkontakten 40 - mit ihren Kontaktflächen 4 in Richtung Einschubrahmen parallel zu den Seitenwänden 9 des Schaltgerätes (Verschiebungsrichtung 5 des Schaltgerätes). Der Träger 2 weist an seinen beiden Enden abgewinkelte Flächen 6 auf, die parallel zu den Kontaktmessern 1 verlaufen. Die Kontaktmesser sind über in der Zeichnung nicht erkennbare leitende Abstandshalter mittels je zweier Schraubverbindungen 7 an leitenden Seitenblechen 8 der Seitenwände 9 des Schaltgerätes 3 befestigt. - Der Niederspannungs-Leistungsschalter wird zu seiner Montage in einem Einschubrahmen 10 (vgl. Figur 2) mit an den Seitenblechen 8 ausgebildeten Füßen 11 auf aus dem Einschubrahmen teilweise herausführbaren Führungsschienen 12 (vgl. Figur 2) aufgesetzt. Der Einschubrahmen kann in einer Kammer eines Schaltfeldes einer Schaltanlage angeordnet sein. Mittels eines nicht weiter dargestellten Transportmechanismus kann das Schaltgerät dann entlang der Führungsschienen 12 von einer Trennstellung bis in eine Betriebsstellung verschoben werden. Der Transportmechanismus kann hierbei ähnlich dem aus der EP 0 228 987 B1 bekannten Transportmechanismus ausgebildet sein.

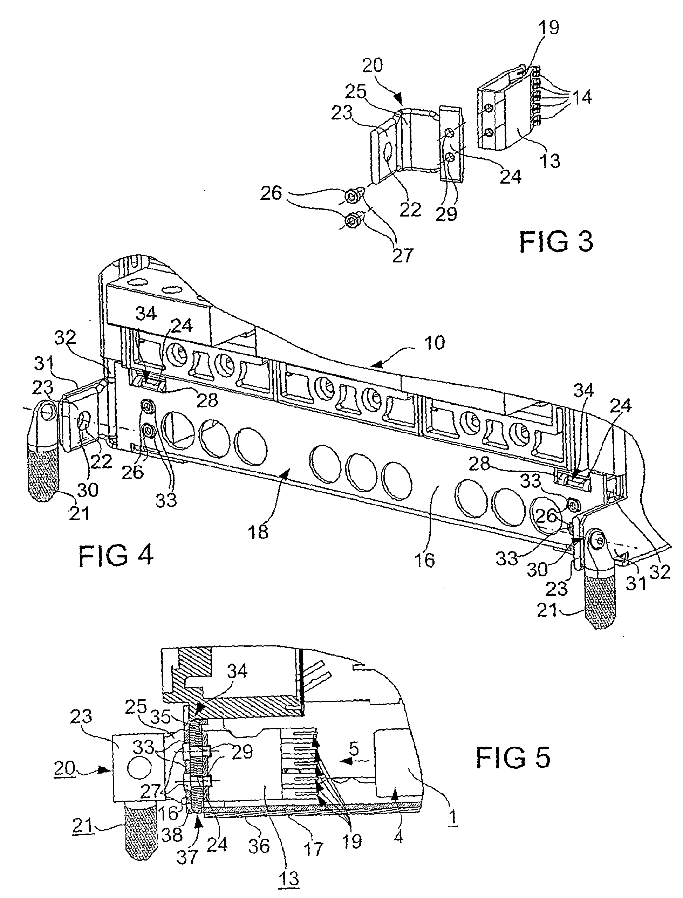

Gemäß Figur 2 weist die Zusatzeinrichtung weiterhin zwei dem Einschubrahmen 10 zugeordnete zweite Kontakte 13 auf. Diese sind als mit Kontaktfingern 14 versehende Gegenkontakte ausgebildet (vgl. auch Figur 3). Ein erster dieser zweiten Kontakte 13 wird nahe der linken Seitenwand und der zweite nahe der rechten Seitenwand an der Innenseite 15 eines nach oben gebogenen Abschnittes 16 des Bodenbleches 17 - das einen Teilbereich der Rückwand 18 des Einschubrahmens bildet - gehalten. Diese zweiten Kontakte 13 erstrecken sich mit ihren an den Kontaktfingern 14 ausgebildeten Kontaktflächen 19 (vgl. auch Figur 3) ebenfalls in Verschiebungsrichtung 5 des Schaltgerätes. Hierzu sind die zweiten Kontakte 13 jeweils als U-förmige Kontaktwinkel ausgebildet, an deren Schenkel mehrere Kontaktfinger 14 angeformt sind. Bei in den Einschubrahmen 10 eingesetztem Schaltgerät 3 liegen diese Kontaktfinger 14 von der Trennstellung bis zur Betriebstellung des Schaltgerätes in dem Einschubrahmen beiderseits des Kontaktmessers federnd an. Die zweiten Kontakte 13 sind mit einem Kontaktträger 20 fest verschraubt.

Gemäß Figur 3 weist der jeweilige Kontaktträger 20 einen ersten, einem Erdungsmittel 21 (vgl. Figuren 4 und 5) zugeordneten und dazu mit einer ersten Anschlussbohrung 22 versehenen Teilbereich 23 und einen zweiten, dem zweiten Kontakt 13 zugeordneten Teilbereich 24 sowie ein diese beiden Teilbereiche 23, 24 verbindendes Kontaktband 25 auf. Dieses als flexibles Kupferband ausgebildete Kontaktband 25 stellt eine stromleitende Verbindung zwischen den beiden Teilbereichen 23, 24 her, entkoppelt diese jedoch mechanisch. Zum Befestigen des zweiten Kontaktes 13 an dem zweiten als Lasche ausgebildeten Teilbereich 24 des Kontaktträgers 20 dienen zwei mit einem zylindrischen Schraubenkopf 26 versehende Schrauben 27, die zum Betätigen einen Innensechskant aufweisen. Diese Schrauben 27 durchgreifen die Lasche 24 im Bereich zweier Bohrungen 29 und sind mit dem zweiten Kontakt 13 fest verschraubt.

Gemäß Figur 4 weist der Einschubrahmen 10 zwei mit jeweils einer zweiten Anschlussbohrung 30 versehene Erdungsanschlüsse auf, die als über die Rückwand 18 des Einschubrahmens 10 nasenartig hervorstehende Abschnitte 31 der Seitenwände ausgebildet sind. Zwischen dem nach oben gebogenen Abschnitt 16 des Bodenbleches und den nasenartig hervorstehenden Abschnitten 31 befinden sich zwei Durchführungen 32 für die Kontaktbänder 25. Die die Durchführungen 32 durchgreifenden Bereiche der Kontaktbänder 25 und die zweiten Teilbereiche 24 der Kontaktträger liegen jeweils an einem der nasenartig hervorstehenden Abschnitte 31 der Seitenwände derart flach an, dass die an den ersten Teilbereichen 23 ausgebildeten ersten Anschlussbohrungen 22 koaxial zu den zweiten Anschlussbohrungen 30 des Einschubrahmens verlaufen. Hierdurch ist sichergestellt, dass bei fest angeschlossenem Erdungsmittel 21 die ersten Teilbereiche 23 beider Kontaktträger am Einschubrahmen 10 fixiert sind.

Im Bereich des nach oben gebogenen Abschnittes 16 des Bodenbleches befinden sich jeweils zwei als Langlöcher ausgebildete Führungen 33 für die mit zylinderförmigen Köpfen 26 versehenen, als Führungselemente der Kontaktträger dienenden Schrauben. Zwei mit jeweils einer Ausnehmung versehene Kantenabschnitte 28 des rückwärtig nach oben gebogenen Abschnittes des Bodenbleches sind in den Innenbereich des Einschubrahmens eingebogen. Sie werden jeweils von einem ersten Randbereich des als Lasche ausgebildeten zweiten Teilbereiches des jeweiligen Kontaktträgers derart durchgriffen, dass sie Halteschlitze 34 für die zweiten Teilbereiche 24 bilden.

Gemäß Figur 5 sind im Bodenblech 17 und in parallel zum Bodenblech verlaufenden Abschnitten 36 der Seitenbleche jeweils weitere Halteschlitze 37 ausgebildet. Diese weiteren Halteschlitze 37 können bei der Montage der beiden Kontaktträger zunächst soweit von einem zweiten Randbereich 38 der Lasche 24 durchgriffen werden, dass die jeweilige Lasche am nach oben gebogenen Abschnitt 16 des Bodenbleches flach anliegt. Danach kann die Lasche soweit verschoben werden, bis ihr erster Randbereich 35 den ersten Halterschlitz 34 durchgreift und die Bohrungen 29 der Lasche 24 koaxial zu den Langlöchern 33 verlaufen. Danach werden die mit dem Innensechskant versehenen Schrauben 27 eingesetzt und festgezogen. Damit ist der zweite Teilbereich 24 des jeweiligen Kontaktträgers 20 mittels der entlang der Langlöcher 33 führbaren zylindrischen Schraubenköpfe 26 mit quer zu den Kontaktflächen 4 des ersten Kontaktes 1 und den Kontaktflächen 19 des zweiten Kontaktes 13 verlaufendem Spiel an der Rückwand des Einschubrahmens gehalten.

Beim Einschub des Schaltgerätes in den Einschubrahmen richten sich die zweiten Kontakte 13 je nach Lage des Schaltgerätes selbsttätig auf die ersten Kontakte 1 aus, so dass sich die Kontaktfinger 14 des jeweiligen zweiten Kontaktes 13 beidseitig des zugeordneten Kontaktmessers 1 mit gleicher Kontaktkraft anlegen.

## Patentansprüche

1. Einrichtung zur Erdung eines in einem Einschubrahmen (10) zwischen einer Trennstellung und einer Betriebsstellung verschiebbar angeordneten Schaltgerätes (3) mit einem am Schaltgerät (3) angeordneten ersten Kontakt (1), einem dem Einschubrahmen (10) zugeordneten zweiten Kontakt (13) und einem dem zweiten Kontakt (13) zugeordneten Kontaktträger (20),
- bei der sich beide Kontakte (1, 13) in Verschiebungsrichtung (5) des Schaltgerätes (3) derart erstrecken, dass sie beim Verschieben des Schaltgerätes von der Trennstellung bis zur Betriebsstellung federnd aneinander anliegen und
- bei der der Kontaktträger (20) einen ersten, zum Anschluss eines Erdungsmittels vorgesehenen Teilbereich (23) und einen zweiten, mit dem zweiten Kontakt verbindbaren Teilbereich (24) sowie ein diese beiden Teilbereiche verbindendes Kontaktband (25) aufweist,
- wobei der erste Teilbereich (23) mit dem Einschubrahmen (10) fest verbindbar ist und
- wobei der zweite Teilbereich (24) mit quer zur Verschiebungsrichtung (5) des Schaltgerätes (3) verlaufendem Spiel an der Rückwand (18) des Einschubrahmens gehalten ist.

2. Einrichtung nach Anspruch 1,
**dadurch gekennzeichnet,**
**dass** der zweite Teilbereich (24) als Lasche ausgebildet ist, die in am Einschubrahmen ausgebildeten Halteschlitzen (34, 37) verschiebbar angeordnet ist.

3. Einrichtung nach einem der Ansprüche 1 oder 2,
**dadurch gekennzeichnet,**
**dass** an dem zweiten Teilbereich (24) ein Führungselement (27) ausgebildet ist, das in eine in der Rückwand des Einschubrahmens ausgebildete Führung (33) eingreift.

4. Einrichtung nach einem der Ansprüche 1 bis 3,
**dadurch gekennzeichnet,**
**dass** der Kontaktträger (20) und der zweite Kontakt (13) mittels des Führungselementes (27) fest verbunden sind.

5. Einrichtung nach einem der Ansprüche 1 bis 4,
**dadurch gekennzeichnet,**
**dass** der zweite Teilbereich (24) des Kontaktträgers (20) an der Innenseite (15) der Rückwand (18) des Einschubrahmens anliegt und dass der Einschubrahmen (10) eine Durchführung (32) für das Kontaktband (25) aufweist.

6. Einrichtung nach einem der Ansprüche 1 bis 5,
**dadurch gekennzeichnet,**
**dass** der erste Kontakt (1) als Kontaktmesser und der zweite Kontakt (13) als mit Kontaktfingern (14) versehener Gegenkontakt ausgebildet sind,
wobei die Kontaktflächen (4, 19) beider Kontakte (1, 13) parallel zu einer Seitenwand (9) des Einschubrahmens (10) verlaufen.

## Claims

1. Device for grounding a switching device (3), arranged moveably between a disconnected position and an operating position in a withdrawable part rack (10) and having a first contact (1) arranged on the switching unit (3), a second contact (13) associated with the withdrawable part rack, and a contact support (20) associated with the second contact (13),
- in which the two contacts (1, 13) extend in the movement direction (5) of the switching device (3) such that they rest against one another in a sprung manner when the switching device is moved from the disconnected position to the operating position, and
- in which the contact support (20) has a first subregion (23), provided for connecting a grounding means, and a second subregion (24), which may be connected to the second contact, as well as a contact strip (25) connecting these two subregions,
- it being possible to connect the first subregion (23) in a fixed manner to the withdrawable part rack (10), and
- the second subregion (24) being held on the rear wall (18) of the withdrawable part rack with play, running transversely with respect to the movement direction (5) of the switching device (3).

2. Device according to Claim 1,
**characterized**
**in that** the second subregion (24) is in the form of a tab which is arranged moveably in retaining slots (34, 37) formed in the withdrawable part rack.

3. Device according to either of Claims 1 or 2, **characterized in that** a guide element (27) is formed on the second subregion (24) and engages in a guide (33) formed in the rear wall of the withdrawable part rack.

4. Device according to one of Claims 1 to 3, **characterized in that** the contact support (20) and the second contact (13) are connected in a fixed manner by means of the guide element (27).

5. Device according to one of Claims 1 to 4, **characterized in that** the second subregion (24) of the contact support (20) rests against the inside (15) of the rear wall (18) of the withdrawable part rack and **in that** the withdrawable part rack (10) has a bushing (32) for the contact strip (25).

6. Device according to one of Claims 1 to 5, **characterized in that** the first contact (1) is in the form of a contact blade, and the second contact (13) is in the form of an opposing contact provided with contact fingers (14),
the contact surfaces (4, 19) of the two contacts (1, 13) running parallel to one side wall (9) of the withdrawable part rack (10).

## Revendications

1. Dispositif de mise à la terre d'un appareil ( 3 ) électrique monté coulissant dans un cadre ( 10 ) de baie entre une position de séparation et une position de fonctionnement, comprenant un premier contact ( 1 ) disposé sur l'appareil (3) électrique, un deuxième contact ( 13 ) associé au cadre ( 10) de baie et un porte-contact ( 20) associé au deuxième contact ( 13 ),
- dans lequel les deux contacts ( 1, 13 ) s'étendent dans la direction ( 5 ) de coulissement de l'appareil ( 3 ) de manière à s'appliquer élastiquement l'un contre l'autre lorsque l'appareil électrique se déplace de la position de séparation jusqu'à la position de fonctionnement et
- dans lequel le porte-contact ( 20 ) a une première sous-zone ( 23 ) prévue pour le raccordement d'un moyen de mise à la terre et une deuxième sous-zone ( 24 ) pouvant être reliée au deuxième contact ainsi qu'une bande ( 25 ) de contact reliant ces deux sous-zones,
- dans lequel la première sous-zone ( 23 ) peut être reliée rigidement au cadre ( 10 ) de baie et
- dans lequel la deuxième sous-zone ( 24 ) est maintenue sur la paroi ( 18 ) arrière du cadre de baie avec du jeu s'étendant transversalement à la direction ( 5 ) de coulissement de l'appareil ( 3 ) électrique.

2. Dispositif suivant la revendication 1,
**caractérisé**
**en ce que** la deuxième sous-zone ( 24 ) est constituée sous la forme d'une éclisse qui est montée coulissante dans des fentes ( 34, 37 ) de maintien formées sur le cadre de baie.

3. Dispositif suivant l'une des revendications 1 ou 2, **caractérisé**
**en ce que** sur la deuxième sous-zone ( 24 ) est formée un élément ( 27 ) de guidage, qui pénètre dans un guidage ( 33 ) formé dans la paroi arrière du cadre de baie.

4. Dispositif suivant l'une des revendications 1 à 3, **caractérisé**
**en ce que** le porte-contact ( 20 ) et le deuxième contact ( 13 ) sont reliés rigidement au moyen de l'élément ( 27 ) de guidage.

5. Dispositif suivant l'une des revendications 1 à 4, **caractérisé**
**en ce que** le deuxième sous-zone ( 24 ) du porte-contact ( 20 ) s'applique à la face ( 15 ) intérieure de la paroi ( 18 ) arrière du cadre de baie et en ce que le cadre ( 10 ) de baie a une traversée ( 32 ) pour la bande ( 25 ) de contact.

6. Dispositif suivant l'une des revendications 1 à 5, **caractérisé**
**en ce que** le premier contact ( 1 ) est constitué sous la forme d'une lame de contact et le deuxième contact ( 13 ) est constitué sous la forme d'un contact antagonisme muni de doigts ( 24 ) de contact,
dans lequel les surfaces ( 4, 19 ) de contact des deux contacts ( 1, 13 ) s'étendent parallèlement à une paroi ( 9 ) latérale du cadre ( 10 ) de baie.
